# EUROPEAN PATENT APPLICATION

(11) **EP 1 452 779 A2**
(43) Date of publication of application: **01.09.2004**
(21) Application number: 04250924.0
(22) Date of filing: 20.02.2004
(51) Int. Cl.: F16H 61/00

(54) **Shift control apparatus of continuously variable transmission**

(30) Priority: 28.02.2003 JP 2003052572
(71) Applicant: JATCO Ltd, Fuji-shi, Shizuoka 417-8585 (JP)
(72) Inventor: Iida, Toshiji, Fuji-shi, Shizuoka 417/8585 (JP)
(74) Representative: Baldwin, Mark

(57) **Abstract**

A shift control apparatus of a continuously variable transmission is provided which is capable of preventing longitudinal belt slip without excessively limiting the target gear ratio. A final target gear ratio based on the operative status is obtained through calculations performed by a target primary revolution-setting section, a final target gear ratio-calculating section, and a shift speed-calculating section. A target gear ratio per predetermined time interval is set while the gear ratio is changed to the final target gear ratio. A stroke limit gear ratio is obtained through calculations performed by a stroke limit speed-calculating section, a stroke variation-calculating section, and a stroke limit gear ratio-calculating section. A switching section outputs a smaller one of the target gear ratio and the stroke limit gear ratio as a control target gear ratio when a control range discriminating section determines that the operative state lies in a predetermined control range at the start of a vehicle.

## Description

### BACKGROUND OF THE INVENTION

### Field of the Invention

The present invention relates to a shift control apparatus of a V-belt type continuously variable transmission for a vehicle.

### Description of the Prior Art

Conventionally, as an example of continuously variable transmissions which can be suitably used for vehicles, a continuously variable transmission using a V belt has been known (Japanese Patent Application Laid-Open Publication No. 11-13876).

This continuously variable transmission is constructed such that the V belt is wound between a primary pulley connected to an engine via a torque converter and a secondary pulley connected to wheel axles, and the groove width of the primary pulley is variably controlled by oil pressure.

Specifically, a first cylinder chamber and a second cylinder chamber are provided to the primary pulley and the secondary pulley, respectively, and line pressure is constantly supplied to the second cylinder chamber of the secondary pulley, while oil pressure obtained by adjusting the line pressure as an original pressure via a shift control valve is supplied to the first cylinder chamber of the primary pulley. While a vehicle is running, the oil pressure supplied to the first cylinder chamber varies the groove width of the primary pulley, thereby the pulley ratio (i.e. the gear ratio) is changed.

To control the gear ratio, revolution speed Npri of the primary pulley is set using a map which is prepared in advance based on the throttle valve opening and the vehicle speed, and a final target gear ratio is determined according to the ratio of the set revolution speed Npri of the primary pulley to the current revolution speed of the secondary pulley.

When the gear ratio is changed to the final target gear ratio, the present target gear ratio is calculated according to a difference between the previous (present) target gear ratio and the final target gear ratio per unit time interval, and oil pressure which is applied to the first cylinder chamber of the primary pulley is controlled based on the calculated present target gear ratio.

As disclosed in Japanese Patent Application Laid-Open Publication No. 11-13876, as the gear ratio is changed from a low gear ratio (High pulley ratio) corresponding to the fifth speed gear to a high gear ratio (Low pulley ratio) corresponding to the first speed gear, when the vehicle is suddenly stopped by braking, the secondary pulley connected to the wheel axles stops revolving, and hence the gear ratio cannot reach the final target gear ratio, and the transmission mechanism stops operation at a gear position corresponding to the fourth speed gear, for example.

In this case, when the vehicle is restarted, the gear ratio is changed from the gear ratio corresponding to the fourth speed gear to the gear ratio corresponding to the first speed gear, but if control is restarted with the target gear ratio being maintained at the previous target gear ratio determined for gear shift from the gear ratio corresponding to the fifth speed gear to the gear ratio corresponding to the first speed gear, the V belt moves on the primary pulley at an excessively high speed, i.e. longitudinal belt slip (belt slip in the direction of the radius of the pulley) occurs.

Conventionally, the target gear ratio per unit time interval needs to be limited excessively to provide such a margin as to prevent the longitudinal belt slip. Therefore, the gear ratio cannot be changed with a high responsiveness, and hence the driver has an uncomfortable feeling.

### SUMMARY OF THE INVENTION

It is therefore an object of the present invention to provide a shift control apparatus of a continuously variable transmission, which is capable of preventing longitudinal belt slip without excessively limiting the target gear ratio.

To attain the above object, there is provided a shift control apparatus of a continuously variable transmission for a vehicle, in which a V belt is wound between a primary pulley connected to an engine and a secondary pulley connected to wheel axles, and groove widths of the respective pulleys are variably controlled to change the gear ratio, wherein the shift speed (speed at which the gear ratio is changed) is controlled according to the stroke limit speed in the direction of the groove widths of the pulleys. If the V belt is stroked in the direction of the groove widths of the pulleys at a speed equal to or higher than the stroke limit speed, longitudinal belt slip occurs.

According to the present invention, since the shift speed is only limited according to the stroke limit speed in the direction of the groove widths of the pulleys, it is possible to prevent longitudinal belt slip without fixed excessive limitation on the shift speed. Therefore, the shift speed at which the gear ratio is changed to the final target gear ratio can be increased as a whole to improve the driving performance.

The above and other objects, features, and advantages of the invention will become more apparent from the following detailed description taken in conjunction with the accompanying drawings.

### BRIEF DESCRIPTION OF THE DRAWINGS

FIG. 1 is a block diagram showing the construction of a shift control apparatus of a continuously variable transmission according to an embodiment of the present invention;
FIG. 2 is a block diagram showing functional blocks related to control for determination and correction of the target gear ratio; and
FIG. 3 is a flow chart showing a control process.

### DETAILED DESCRIPTION OF THE PREFERRED EMBODIMENT

The present invention will now be described in detail with reference to the drawings showing preferred embodiments thereof.

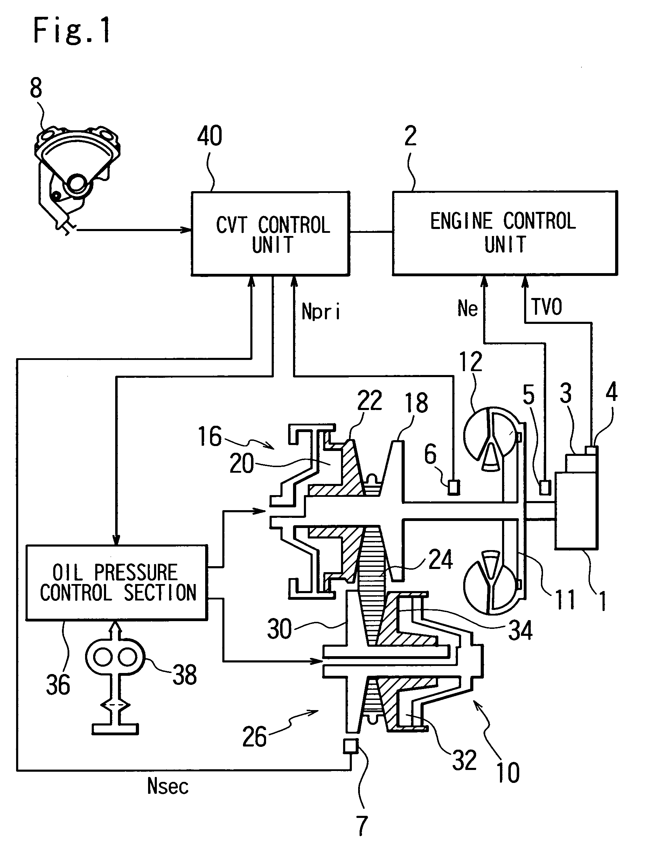

As shown in Fig. 1 a transmission mechanism 10, in which a V belt 24 is wound between a primary pulley 16 and a secondary pulley 26, is connected to an engine 1 via a torque converter 12 having a lock-up clutch 11.

The primary pulley 16 is constructed such that a V-shaped pulley groove is formed by a fixed conical plate 18, which rotates integrally with an output shaft of the torque converter 12, and a movable conical plate 22 opposed to the fixed conical plate 18. The primary pulley 16 is provided with a first cylinder chamber 20 which causes axial displacement of the movable conical plate 22 by applying oil pressure to a back surface of the movable conical plate 22.

The secondary pulley 26 is constructed such that a V-shaped pulley groove is formed by a fixed conical plate 30, which rotates integrally with an output shaft connected to wheel axles, not shown, and a movable conical plate 34 opposed to the fixed conical plate 30. The movable conical plate 34 is forced by a return spring, not shown, in such a direction as to narrow the pulley groove, and is provided with a second cylinder chamber 32 which causes axial displacement of the movable conical plate 34 by applying oil pressure to a back surface of the movable conical plate 34.

The transmission mechanism 10 is controlled via an oil pressure control section 36 according to an instruction from a CVT control unit 40 as a shift control means. The oil pressure control section 36 causes an oil pressure control valve incorporated therein, not shown, to adjust oil pressure supplied from an oil pressure pump 38.

Specifically, the oil pressure control section 36 constantly supplies line pressure to the second cylinder chamber 32, and also supplies oil pressure, which is obtained by adjusting the line pressure as an original pressure, to the first cylinder chamber 20.

The groove width of the primary pulley 16 is changed by controlling the oil pressure applied to the first cylinder chamber 20, while line pressure is supplied to the second cylinder chamber 32 to control a force which supports the V belt 24 by sandwiching it, thereby the gear ratio is changed, and driving force is transmitted according to a frictional force generated by contact between the V belt 24 and the pulleys 16 and 26.

If this is considered in terms of the engine speed, when the pulley ratio is low due to an increased groove width of the primary pulley 16, i.e. the radius of contact between the V belt 24 and the primary pulley 16 is small and the radius of contact between the V belt 24 and the secondary pulley 26 is large, the driving force is output to wheel axles in the state in which the engine speed has been reduced due to an increase in gear ratio. Conversely, when the pulley ratio is high, the driving force is output at a low gear ratio. During this time, the gear ratio continuously changes according to the ratio of radius of contact between the primary pulley 16 and the secondary pulley 26.

On the other hand, the engine 1 is controlled by an engine control unit 2 (control lines are not illustrated). Connected to the engine control unit 2 are a throttle sensor 4, which detects the angle of opening (throttle valve opening TVO) of a throttle valve 3 operated through an accelerator pedal, not shown, and an engine speed sensor 5.

The engine control unit 2 controls the fuel injection quantity and the ignition timing according to the current engine speed Ne detected by the engine speed sensor 5.

The engine control unit 2 supplies information indicative of the throttle valve opening TVO to the CVT control unit 40.

Connected to the CVT control unit 40 are a first revolution speed sensor 6, which detects the input revolution speed Npri of the primary pulley 16, and a second revolution speed sensor 7, which detects the output revolution speed Nsec of the secondary pulley 26.

Since the output shaft of the secondary pulley 26 is connected to the wheel axles, the vehicle speed Ns can be obtained based on the output revolution speed Nsec of the secondary pulley 26.

During normal driving, the CVT control unit 40 feedback-controls line pressure based on normal line pressure characteristics.

Specifically, the CVT control unit 40 finds an input torque, which is input to the transmission mechanism 10 via the torque converter 12, according to a select position signal output from an inhibitor switch 8 provided to a select lever, not shown, and an engine torque calculated based on the throttle valve opening TVO and the engine speed Ne during driving. Then, the CVT control unit 40 finds a necessary line pressure corresponding to the input torque according to the normal line pressure characteristics, and then transmits an instruction to the oil pressure control section 36.

The CVT control unit 40 sets a target value (target Npri) of the input revolution speed (primary revolution) Npri of the primary pulley 16, which is determined in advance according to driving conditions represented by the throttle valve opening TVO and the vehicle speed Ns, and determines a final target gear ratio (target pulley ratio) Gt according to the target value of the input revolution speed Npri and the output revolution speed (secondary revolution) Nsec of the secondary pulley 26.

Further, the CVT control unit 40 calculates the stroke limit speed of the primary pulley 16 according to the input torque, the current gear ratio, and the input revolution speed Npri of the primary pulley 16, and corrects a target gear ratio G(n), described later, according to the stroke per unit time interval based on the stroke limit speed. The CVT control unit 40 controls the oil pressure supplied to the first cylinder chamber 20 by outputting an instruction to the oil pressure control section 36 based on this target gear ratio.

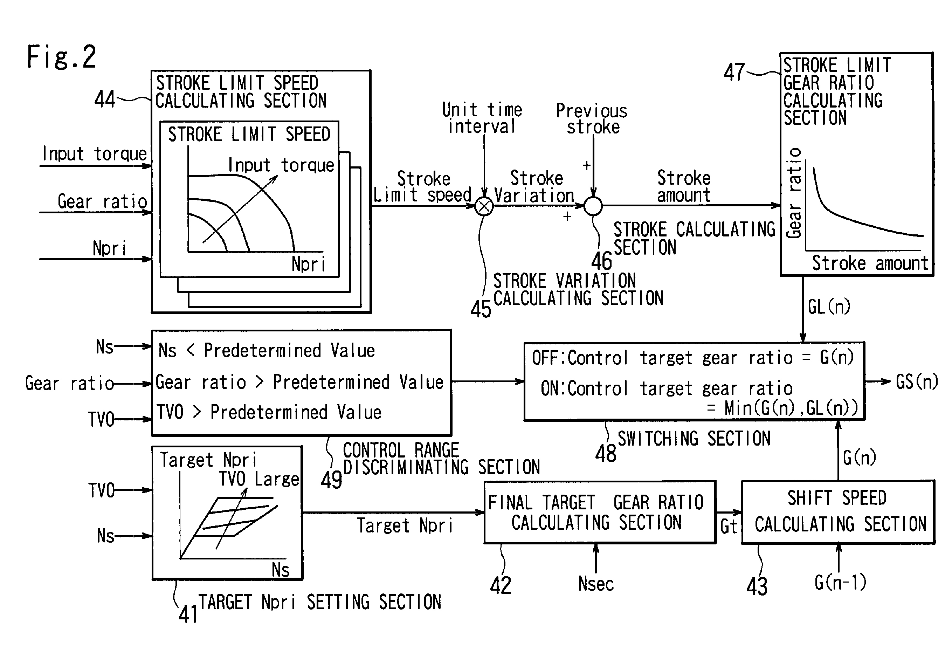

FIG. 2 is a block diagram showing functional blocks related to control for determination and correction of the target gear ratio G performed by the CVT control unit 40.

First, a target Npri-setting section 41 obtains the target Npri based on the throttle valve opening TVO input via the engine control unit 2 and the vehicle speed Ns obtained from the secondary revolution Nsec with reference to a map which is prepared in advance.

A final target gear ratio-calculating section 42 calculates the final target gear ratio Gt by dividing the target Npri by the secondary revolution Nsec.

Next, a shift speed-calculating section 43 calculates a target gear ratio per unit time interval for use in providing control while the gear ratio is changed to the final target gear ratio Gt, and calculates the present target gear ratio G(n) according to a difference between the previous target gear ratio G(n-1) per unit time interval and the final target gear ratio Gt.

The above described target Npri-setting section 41, final target gear ratio-calculating section 42, and shift speed-calculating section 43 constitute a target gear ratio setting means according to the present invention.

On the other hand, a stroke limit speed-calculating section 44 calculates the stroke limit speed according to the input torque from the engine 1, which is calculated based on the throttle valve opening TVO and the engine speed Ne, and the primary revolution Npri detected by the first revolution speed sensor 6, with reference to a map which is prepared in advance for respective present gear ratio.

The higher the input torque and the smaller the primary revolution Npri, the higher the stroke limit speed.

Also, the higher the gear ratio, the higher the stroke limit speed.

A stroke variation-calculating section 45 multiplies the stroke limit speed by a unit time interval in control to calculate a variation in stroke per unit time. A stroke calculating section 46 then adds the variation in stroke to the previous stroke amount to obtain the present stroke amount.

A stroke limit gear ratio-calculating section 47 calculates a stroke limit gear ratio GL(n) according to the stroke amount with reference to a map which is prepared in advance. When the stroke amount is small, the gear ratio can be set to a high gear ratio (Low pulley ratio), and on the other hand, when the stroke amount is large, the gear ratio is limited to a low gear ratio (High pulley ratio).

The above described stroke limit speed-calculating section 44, stroke variation-calculating section 45, stroke calculating section 46, and stroke limit gear ratio-calculating section 47 constitute a stoke limit gear ratio calculating means according to the present invention.

The stroke limit gear ratio GL(n) calculated by the stroke limit gear ratio-calculating section 47 and the target gear ratio G(n) calculated by the shift speed-calculating section 43 are input to a switching section 48.

The switching section 48 is controlled by a control range discriminating section 49. The control range discriminating section 49 brings the switching section 48 into a control ON state when determining that the operative status lies in a control range in initial stage of starting, i.e. a range where the vehicle speed Ns is lower than a predetermined speed, the gear ratio is higher than a predetermined ratio, and the throttle valve opening TVO is greater than a predetermined value, and brings the switching section 48 into a control OFF state when determining that the operative status does not lie in the above control range.

In the control OFF state, the switching section 48 generates the target gear ratio G(n) output from the shift speed-calculating section 43 as a control target gear ratio GS(n), and outputs the corresponding instruction to the oil pressure control section 36.

On the other hand, in the control ON state, the switching section 48 generates a smaller one of the target gear ratio G(n) and the stroke limit gear ratio GL(n) output from the stroke limit gear ratio-calculating section 47 as a control target gear ratio GS(n), and then outputs the corresponding instruction to the oil pressure control section 36.

The switching section 48 and the control range discriminating section 49 constitute a selecting means according to the present invention.

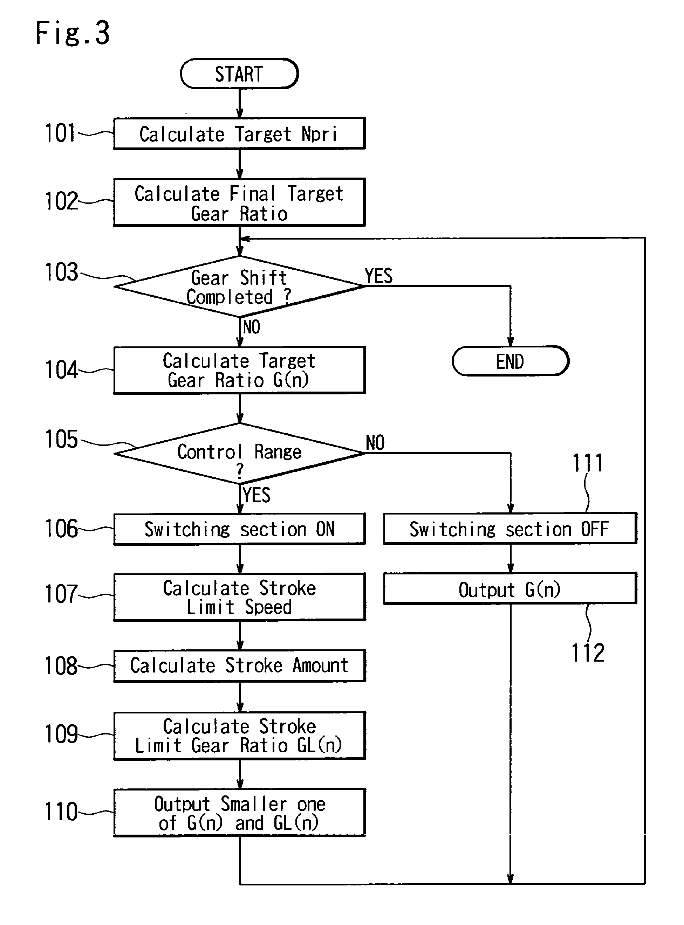

FIG. 3 is a flow chart showing the flow of the above described control.

First, in a step 101, the target Npri-setting section 41 reads the throttle valve opening TVO and the vehicle speed Ns to calculate the target Npri.

Then, in a step 102, the final target gear ratio-calculating section 42 calculates the final target gear ratio Gt.

In a step 103, it is checked whether gear shift has been completed or not. Namely, it is ascertained whether the gear ratio is equal to the final target gear ratio Gt or not.

If gear shift has not been completed yet, the process proceeds to a step 104 wherein the shift speed-calculating section 43 calculates the target gear ratio G(n). It should be noted that when gear shift is completed by repeating the flow of control described below, the flow of control is terminated to prepare for the next gear shift.

In a step 105, the control range discriminating section 49 checks whether or not the operative status lies in the control range in initial stage of starting, based on the vehicle speed, gear ratio and throttle valve opening. If the operative status lies in the control range, the process proceeds to a step 106 wherein the control range discriminating section 49 brings the switching section 48 into the control ON state, and if the operative status does not lie in the control range, the process proceeds to Step 111 wherein the control range discriminating section 49 brings the switching section 48 into the control OFF state.

After the switching section 48 is brought into the control ON state, the process proceeds to a step 107 wherein the stroke limit speed-calculating section 44 calculates the stroke limit speed based on the input torque, present gear ratio, and primary revolution Npri.

Further, in a step 108, the present stroke amount is calculated through the stroke variation-calculating section 45 and the stroke calculating section 46, and in a step 109, the stroke limit gear ratio GL(n) is calculated by the stroke limit gear ratio-calculating section 47.

In a step 110, the switching section 48, which lies in the control ON state, compares the stroke limit gear ratio GL(n) with the target gear ratio G(n) calculated in the Step 103, and outputs a smaller one of them as the control target gear ratio GS(n).

On the other hand, switching section 48 which is brought into the control OFF state outputs the target gear ratio G(n) as the control target gear ratio GS(n)in a step 112.

After the execution of the Steps 110 and 112, the process returns to the Step 103 to execute the above described steps again.

According to the present invention as described above, the final target gear ratio based on the operative status is found through calculations performed by the target Npri-setting section 41, final target gear ratio-calculating section 42, and shift speed-calculating section 43, and the target gear ratio G(n) per predetermined time interval is set while the gear ratio is changed to the final target gear ratio. On the other hand, the stroke limit gear ratio GL(n) per predetermined time interval is calculated through operations performed by the stroke limit speed-calculating section 44, stroke variation-calculating section 45, stroke calculating section 46, and stroke limit gear ratio-calculating section 47, and then the switching section 48 compares the target gear ratio and the stroke limit gear ratio GL(n) with each other and generates a smaller one of them as the control target gear ratio GS(n). Therefore, it is possible to prevent longitudinal belt slip without constantly imposing an excessive limit on the shift speed. As a result, the shift speed at which the gear ratio is changed to the final target gear ratio can be increased as a whole to improved the driving performance.

Further, the switching section 48 is operable when the control range discriminating section 49 determines that the operative status lies in a predetermined control range at the start of the vehicle, for comparing the target gear ratio G(n) and the stroke limit gear ratio GL(n) with each other and outputting a smaller one of them as the control target gear ratio, and is operable when the control range discriminating section 49 determines that the operative status does not lie in the control range, for outputting the target gear ratio G(n) as the control target gear ratio. Therefore, the shift speed is limited only when the vehicle is restarted e.g. after the vehicle stops in the state in which the final target gear ratio has not been reached yet due to rapid deceleration, and hence during normal driving, the gear ratio can be changed with a high responsiveness.

Although the present invention has been described in some detail by way of illustration for purposes of clarity of understanding, it will be apparent that certain changes and modifications may be practiced within the scope of the claims. Such modifications and variations which may be apparent to a person skilled in the art are intended to be within the scope of this invention.

The entire contents of Japanese Patent Application P2003-52572 (filed February 28, 2003) are incorporated herein by reference.

## Claims

1. A shift control apparatus of a continuously variable transmission for a vehicle, in which a V belt(24) is wound between a primary pulley(16) connected to an engine and a secondary pulley(26) connected to wheel axles, and groove widths of respective ones of the primary pulley and the secondary pulley are variably controlled to change a gear ratio, wherein:
a shift speed at which the gear ratio is changed is controlled according to a stroke limit speed in a direction of the groove widths of the pulleys.

2. A shift control apparatus of a continuously variable transmission for a vehicle, in which a V belt(24) is wound between a primary pulley(16) connected to an engine and a secondary pulley(26) connected to wheel axles, and groove widths of respective ones of the primary pulley and the secondary pulley are variably controlled to change a gear ratio, comprising:
target gear ratio setting means(41, 42, 43) for calculating a final target gear ratio based on an operative status, and setting a target gear ratio per predetermined time interval while the gear ratio is changed to the final target gear ratio;
stroke limit gear ratio calculating means(44, 45, 46, 47) for calculating a stroke per the predetermined time interval based on the stroke limit speed in the direction of the groove width of the primary pulley, and calculating a stroke limit gear ratio corresponding to the calculated stroke; and
selecting means(48, 49) for outputting a smaller one of the target gear ratio and the stroke limit gear ratio as a control target gear ratio.

3. A shift control apparatus of a continuously variable transmission for a vehicle according to claim 2, wherein said selecting means(48, 49) is operable when the operative status lies in a predetermined control range at start of the vehicle, for outputting a smaller one of the target gear ratio and the stroke limit gear ratio as the control target gear ratio, and is operable when the operative status lies outside the predetermined control range, for outputting the target gear ratio as the control target gear ratio.

4. Shift control apparatus for a continuously variable transmission (10) for a vehicle which transmission comprises a primary pulley (16) that in use is connected with an output from the vehicle engine, a secondary pulley (26) that in use is connected with a means for transmitting drive to wheels of the vehicle and a belt (24) connecting the primary and secondary pulleys, wherein the respective groove widths of the pulley are controllably variable to change the gear ratio of the transmission, said shift control apparatus comprising means for controlling the rate of gear ratio change such that the rate of change of the groove width of the pulleys does not exceed a predetermined value.

5. Apparatus as claimed in claim 4, wherein said controlling means is arranged such that it will only control said rate of gear ratio change when predetermined parameters indicate a predetermined operational state of the vehicle in which the transmission is fitted.

6. A method of controlling gear ratio change in a continuously variable transmission for a vehicle which transmission comprises a primary pulley that receives input drive from the vehicle engine, a secondary pulley that outputs drive for transmission to wheels of the vehicle and a belt connecting said pulley and in which the gear ratio of the transmission is controlled by varying the respective groove widths of said pulleys, the method comprising determining a target gear ratio change rate for obtaining a desired gear ratio change and selectively reducing the actual gear ratio change rate below said target gear ratio change rate such that the rate of change of the pulley groove widths does not exceed a predetermined value.

7. A method as claimed in claim 6, comprising determining a maximum gear ratio change rate based on signals indicative of operating parameters of the vehicle, determining whether a first operating condition or a second operating condition of the vehicle is current and applying said maximum gear ratio change rate when said first operating condition is current so that the rate of change of the pulley groove widths does not exceed said predetermined value and applying said target gear ratio change rate when said second operating condition is current.

8. A computer program product comprising one or more computer program software portions which, when executed in an execution environment, are operable to implement one or more steps of claims 6 or 7.

9. A data storage medium having at least one of said computer software portions stored thereon.

10. A microcomputer provided with data storage medium as claimed in claim 9.
